# EUROPÄISCHE PATENTANMELDUNG

(11) **EP 2 224 153 A1**
(43) Veröffentlichungstag der Anmeldung: **01.09.2010**
(21) Anmeldenummer: 09153609.4
(22) Anmeldetag: 25.02.2009
(51) Int. Cl.: F16K 3/02, F16K 51/02

(54) **Vakuumdoppelschieberventil**

(71) Anmelder: VAT Holding AG, 9469 Haag (CH)
(72) Erfinder: Bauer, Ronald, 6840 Götzis (AT); Pietsch, Walter, 9495 Triesen (LI); Blecha, Thomas, 6800 Feldkirch (AT)
(74) Vertreter: Kaminski Harmann

(57) **Zusammenfassung**

Die Erfindung betrifft ein Vakuumdoppelschieberventil (1) zum gasdichten Schliessen eines Transferkanals (2) zwischen zwei Vakuumkammern, mit einem Ventilgehäuse (3), durch welches der Transferkanal (2) führt und das zwischen den beiden Vakuumkammern anordenbar ist. Das Vakuumdoppelschieberventil (1) besitzt einen ersten Verschlussteller (14) zum Verschliessen einer ersten Öffnung (11) und einen zweiten Verschlussteller (24) zum Verschliessen einer zweiten Öffnung (21) im Ventilgehäuse (3). Ein erster Ventilantrieb (13) ist als Linearantrieb zum linearen Verstellen des ersten Verschlusstellers (14) und ein zweiter Ventilantrieb (23a, 23b) ist als Linearantrieb zum linearen Verstellen des zweiten Verschlusstellers (24) ausgebildet. Die Flächennormalen der zumindest teilweise gekrümmten Ventilsitzflächen (12, 22) und der Verschlussflächen (16, 26) verlaufen im Wesentlichen parallel zu den jeweiligen Verschlusstellerebenen (15, 25), so dass die Verschlussteller (14, 24) jeweils linear zwischen einer geöffneten, die jeweilige Öffnung (11, 21) freigebenden Position (O1, 02) und einer gasdicht geschlossenen, über die jeweilige Öffnung (11, 21) linear geschobenen und somit mit der jeweiligen Verschlussfläche (16, 26) auf die jeweilige Ventilsitzfläche (12, 22) drückenden Position (C1, C2) mittels des jeweiligen Ventilantriebs (13, 23) linear verschiebbar sind. Die jeweiligen Schliessrichtungen (18, 28) sind vorzugsweise im Wesentlichen entgegengesetzt.

## Beschreibung

Die Erfindung betrifft ein Vakuumdoppelschieberventil zum gasdichten Schliessen eines Transferkanals zwischen zwei Vakuumkammern nach dem Oberbegriff des Anspruchs 1.

Vakuumventile, durch deren Ventilgehäuse ein Ventilkanal verläuft, der mittels eines einzigen Verschlusses gasdicht schliessbar ist, sind in unterschiedlichen Ausführungsformen aus dem Stand der Technik bekannt. Insbesondere im Bereich der IC- und Halbleiterfertigung, die in einer geschützten Atmosphäre möglichst ohne das Vorhandensein verunreinigender Partikel stattfinden muss, kommen diverse Vakuumventile zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transfers von Prozesskammer zu Prozesskammer müssen sich die hochsensiblen Halbleiterelemente stets in geschützter Atmosphäre - insbesondere in luftleerer und partikelfreier Umgebung bzw. einer Schutzgasatmosphäre - befinden.

Die Prozesskammern sind beispielsweise über Transferkanäle miteinander verbunden. Die Prozesskammern können mittels Vakuumtransferventilen zum Transfer der Teile von der einen zur nächsten Prozesskammer geöffnet und im Anschluss zur Durchführung des jeweiligen Fertigungsschritts gasdicht verschlossen werden. Ausserdem werden bewegliche Transferkammern verwendet, die an den Prozesskammern andocken und die Halbleiterelemente in Schutzatmosphäre zwischen den Prozesskammern transportieren können.

Derartige, von Halbleiterteilen durchlaufene Vakuumventile werden aufgrund des beschriebenen Anwendungsgebiets und der damit verbundenen Dimensionierung auch als Vakuum-Transferventile, aufgrund ihres rechteckigen Öffnungsquerschnitts auch als Rechteckventil und aufgrund ihrer üblichen Funktionsweise auch als Schieberventil, Rechteckschieber oder Transferschieberventil bezeichnet.

Typische Vakuum-Transferventile zum Öffnen und Schliessen eines Transferkanals für Halbleiter-Wafer-Transfermodule haben beispielsweise einen rechteckigen Kanalquerschnitt mit einer Breite von 336 mm und einer Höhe von 50 mm, oder eine beliebige andere Dimensionierung. Aufgrund der sich hierdurch ergebenden grossen Dichtungslängen sind die Anforderungen an die Dichtungen, die Führung des Ventilverschlusses sowie den Antrieb sehr hoch.

Eine regelmässige Wartung des Vakuum-Transferventils, insbesondere ein Austausch der Dichtungen, ist zur Gewährleistung der Gasdichtheit und der Reinhaltung der Prozessatmosphäre zwingend erforderlich.

Weiters werden Vakuumventile zum Öffnen und Schliessen von Gaskanälen eingesetzt. Derartige Ventile befinden sich beispielsweise innerhalb eines Rohrsystems zwischen einer Prozesskammer oder einer Transferkammer und einer Vakuumpumpe oder der Atmosphäre. Der Öffnungsquerschnitt derartiger Ventile, auch Pumpenventile genannt, ist in der Regel wesentlich kleiner als bei einem Vakuum-Transferventil. Unterschiedliche Ausbildungen solcher Vakuumventile sind bekannt, beispielsweise Vakuum-Eckventile und Schieberventile.

Abhängig von der jeweiligen Antriebstechnologie wird insbesondere zwischen Vakuumschieberventilen oder Schieberventilen, auch Ventilschieber oder Rechteckschieber genannt, und Pendelventilen unterschieden, wobei das Schliessen und Öffnen im Stand der Technik meist in zwei Schritten erfolgt. In einem ersten Schritt wird ein Ventilverschluss, insbesondere ein Verschlussteller, im Falle eines Schieberventils, wie beispielsweise aus der US 6,416,037 (Geiser) oder der US 6,056,266 (Blecha) bekannt, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über einen auf der Verschlussseite des Verschlusstellers angeordneten Dichtungsring, der auf den die Öffnung umlaufenden Ventilsitz gepresst wird, erfolgen, oder über einen Dichtungsring auf dem Ventilsitz, gegen den die Verschlussseite des Verschlusstellers gedrückt wird.

Ausserdem sind Schieberventile bekannt, bei welchen der Schliess- und Dichtvorgang über eine einzige lineare Bewegung erfolgt. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Bei Betätigung des Ventils und gasdichten Schliessen und wieder Öffnen sind die zum Einsatz kommenden dynamischen Dichtungen einer dynamischen Belastung ausgesetzt und unterliegen somit zwangsläufig einem gewissen mechanischen Verschleiss. Ein regelmässiges Austauschen der dynamischen Dichtung vor allem bei sehr hohen Anforderungen an die Dichtheit des Ventils und die Partikelfreiheit ist somit erforderlich. Aus diesem Grunde sind Vakuumventile der genannten Art regelmässig derart aufgebaut, dass ein einfaches Austauschen der dynamischen Dichtung möglich ist, beispielsweise durch Entfernen des Ventiltellers, auf welchem die Dichtung angeordnet ist, und Ersetzen des Ventiltellers gegen einen neuen Ventilteller.

Ein hierfür ausgelegtes servicefreundliches Vakuumschieberventil, das eine Wartungsöffnung zum einfachen Entfernen des Ventiltellers sowie eine zum schnellen Austausch geeignete Schnittstelle zwischen dem Ventilteller und der Schubstange des Ventilantriebs vorsieht, sowie ein passendes Multifunktionswerkzeug ist in der US 7,134,642 (Seitz) beschrieben. Mittels einer derartigen Wartungsöffnung kann ohne Entkopplung des Ventilgehäuses von den beiden Vakuumkammern, durch Fluten der Kammern und des Ventilinneren mit der Atmosphärenluft, Öffnen der seitlichen Wartungsöffnung am Ventilgehäuse, Lösen und Herausziehen des Verschlusstellers aus dem Ventilgehäuse und Einsetzen eines neuen Verschlusstellers mit einer neuen Dichtung eine verhältnismäßig schneller und einfacher Austausch der dynamischen Dichtung erfolgen.

Durch Fortschreiten der Halbleitertechnologie sind auch die Anforderungen an die Vakuumventiltechnik in den letzten Jahren stetig gestiegen. Dies betrifft insbesondere die chemische Neutralität des Vakuumventils, dessen Materialen keine ungewollte chemische Reaktion mit dem beteiligten Schutz- oder Prozessgas, das bei dem jeweiligen Prozessschritt des Halbleiterfertigungsverfahrens eingesetzt wird, eingehen sollen. Hiervon betroffen ist zum einen das im Ventilkanal und beim Ventilverschluss verwendete Material, wobei es sich in der Regel um ein Metall oder eine Legierung handelt, zum anderen das Dichtungsmaterial. Während die chemischen Eigenschaften des Ventilkanals und -verschlusses im Laufe der Lebensdauer des Vakuumventils weitgehend konstant bleiben, unterliegen die Dichtungsmaterialien, meist Elastomere, einer gewissen Alterung, welche die chemischen Eigenschaften des Dichtungsmaterials und die Prozessreinheit beeinflussen kann. Neue Halbleiterfertigungsverfahren fordern somit einen regelmässigen Austausch der Dichtungen eines Vakuumventils in noch kürzeren Intervallen.

Die oben beschriebenen servicefreundlichen Vakuumventile mit seitlicher Wartungsöffnung erfordern zwar keine Demontage des Ventilgehäuses von der restlichen Vakuumprozessarchitektur, jedoch ist ein Fluten der beiden mittels des Vakuumventils verbundenen Vakuumkammern bei derartigen Lösungen unvermeidbar. Jede derartige Flutung beider Kammern und des Ventilinneren bewirkt zwangsläufig eine Verunreinigung des Kammerinneren. Der Austausch der Dichtung erfordert somit einen wesentlichen Eingriff in die Halbleiterfertigungsanlage. Die Wiederherstellung der Prozessatmosphäre, insbesondere das erneute Herstellen des Vakuums in beiden Kammern, benötigt Zeit und verlängert die Unterbrechung des Fertigungsprozesses.

Zur Lösung dieses Problems wird in der US 6,095,742 (Kroeker et al.) ein Doppeltransferventil mit zwei unabhängig voneinander betätigbaren Verschlussgliedern beschrieben. Das dort offenbarte Doppeltransferventil besitzt ein Ventilgehäuse mit zwei einander gegenüberliegenden Öffnungen, die jeweils mittels eines Verschlusstellers gasdicht verschliessbar sind. Das Schliessen und Öffnen erfolgt jeweils in zwei Schritten. In einem ersten Schritt wird der jeweilige Verschlussteller linear über eine Öffnung im Wesentlichen parallel zum jeweiligen Ventilsitz verschoben, ohne dass hierbei eine Berührung zwischen dem Verschlussteller und dem Ventilsitz des Ventilgehäuses stattfindet. In einem zweiten Schritt wird der jeweilige Verschlussteller mit dessen Verschlussseite auf den jeweiligen Ventilsitz des Ventilgehäuses gedrückt, so dass die entsprechende Öffnung gasdicht verschlossen wird. Beiden Verschlusstellern ist ein separater Ventilantrieb zugeordnet. Die beiden Ventilantriebe sind nebeneinander auf einer Seite des Ventilgehäuses angeordnet. Das im jeweiligen ersten Schritt erfolgende lineare Verschieben der beiden Verschlussteller erfolgt in eine gemeinsame Schliessrichtung parallel zueinander. Das im zweiten Schritt erfolgende Bewegen und Drücken des Verschlusstellers in senkrechter Richtung auf den Ventilsitz erfolgt in entgegen gesetzte Richtungen. Seitlich am Ventilgehäuse und oberhalb der beiden Verschlussteller ist eine Wartungsöffnung vorgesehen, die einen Zugriff auf die beiden Verschlussteller ermöglicht.

Mittels des beschriebenen Doppeltransferventils ist es möglich, eine Wartung, insbesondere eine Austausch eines der beiden Verschlusstellers durchzuführen, ohne zwangsläufig beide über das Doppeltransferventil verbundene Vakuumkammern mit Atmosphärenluft zu fluten. So ist es möglich, mittels des ersten Verschlusstellers die erste Vakuumkammer gasdicht verschlossen zu halten, während der zweite Verschlussteller bei gefluteter zweiter Vakuumkammer und geflutetem Ventilinneren ausgetauscht werden kann. In anderen Worten ermöglicht das beschriebene Doppeltransferventil, dass nur noch eine der beiden Vakuumkammern bei Austausch eines Verschlusstellers geflutet werden muss und die andere Vakuumkammer gasdicht verschlossen bleiben kann.

Ein Nachteil der beschriebenen Anordnung besteht in dem verhältnismässig komplexen und grossen Aufbau des Ventils. Da das Abdichten der beiden entgegen gesetzten Öffnungen durch eine Art Spreizbewegung, also durch Vergrössern des Abstandes der beiden Verschlussteller zueinander in Richtung der Transferachse erfolgt, muss der Abstand der beiden Öffnungen zueinander verhältnismässig gross sein. Dies erfordert somit auch einen grösseren Abstand der beiden Vakuumkammern zueinander und eine Vergrösserung des Gesamtvolumens der Prozessatmosphäre. Zudem erzwingt die Anordnung der beiden Antriebe ebenfalls eine Vergrösserung des Kammerabstandes.

Es ist daher Aufgabe der Erfindung, ein Vakuumventil zur Verfügung zu stellen, das eine einfache und schnelle Wartung des Ventilverschlusses ohne zwangsläufiges Entkoppeln des Vakuumventils von den Vakuumkammern und ohne zwangsläufige Flutung beider durch das Vakuumventil verbundenen Kammern ermöglicht und das sich durch einen kompakten und einfachen Aufbau sowie einen geringen Abstand der beiden Ventilöffnungen auszeichnet.

Diese Aufgabe wird durch die Verwirklichung der kennzeichnenden Merkmale des unabhängigen Patentanspruchs gelöst. Merkmale, die die Erfindung in alternativer oder vorteilhafter Weise weiterbilden, sind den abhängigen Patentansprüchen zu entnehmen.

Das erfindungsgemässe Vakuumventil ist ein Vakuumdoppelschieberventil zum gasdichten Schliessen eines Transferkanals zwischen zwei Vakuumkammern. Bei den Vakuumkammern kann es sich um beliebige Abschnitte einer gasdicht zu verschliessenden Architektur handeln, beispielsweise eine Prozesskammer oder Transfer- oder Transportkammer zur Herstellung, Bearbeitung, Behandlung, Lagerung oder zum Transport von Teilen, insbesondere Halbleiterelementen und -wavern in geschützter Atmosphäre, insbesondere im Vakuum.

Das Vakuumdoppelschieberventil besitzt ein Ventilgehäuse, durch welches der Transferkanal führt und das zwischen den beiden Vakuumkammern anordenbar ist. Das Ventilgehäuse besitzt eine erste Öffnung für den Transferkanal und eine die erste Öffnung umschliessende erste Ventilsitzfläche sowie eine zweite Öffnung für den Transferkanal und eine die zweite Öffnung umschliessende zweite Ventilsitzfläche. Die zweite Öffnung liegt der ersten Öffnung gegenüber. Die erste Öffnung und die zweite Öffnung haben eine gemeinsame Transferachse entlang des Transferkanals.

Unter einem Vakuumventil ist jede Art von Gasventil zu verstehen, das gasdicht verschliessbar ist. Bevorzugt handelt es sich bei dem Vakuumventil jedoch um ein für eine Halbleiter-Fertigungsanlage ausgebildetes Ventil, insbesondere für eine Halbleiter-Prozesskammer oder eine Halbleiter-Transferkammer. Im Speziellen ist das Vakuumventil als Transferventil, insbesondere als Rechteckschieber-Transferventil mit einem rechteckigen Querschnitt des Transferkanals ausgebildet. Entsprechend hat der Transferkanal im Ventilgehäuse vorzugsweise einen verhältnismässig grossen Querschnitt bei kurzer Kanallänge. Vorzugsweise weist der rechteckige Querschnitt des Transferkanals, der ersten Öffnung und der zweiten Öffnung eine Querschnittsbreite auf, die grösser ist als die Querschnittshöhe und insbesondere mindestens das Dreifache, Fünffache oder Achtfache der Querschnittshöhe beträgt. Der Transferkanal erstreckt sich im Wesentlichen gerade mit einer linearen geometrischen Transferachse durch das Ventilgehäuse. Unter der Transferachse ist allgemein die im Wesentlichen mittig zum Querschnitt verlaufende und sich entlang des Transferkanals erstreckende geometrische Mittelachse des Transferkanals und insbesondere auch der beiden Öffnungen, und/oder im Wesentlichen die geometrische Strömungsmittelachse zu verstehen. Vorzugsweise bildet die Transferachse eine Normale zu den beiden Anschlussebenen der beiden Öffnungen des Ventilgehäuses.

Die beiden beispielsweise rechteckig ausgebildeten Öffnungen haben jeweils eine Mittelachse, die sich im Bereich der Öffnung in der Mitte des Transferkanals parallel zu der Transferachse, insbesondere kollinear erstrecken. Diese beiden Öffnungsachsen stehen beispielsweise jeweils senkrecht auf den von den Öffnungen jeweils aufgespannten Flächen. Die Öffnungen werden von jeweils einer Ventilsitzfläche umschlossen, die sich im Ventilinneren jeweils rings um die entsprechende Öffnung gekrümmt im Wesentlichen innerhalb mehrerer gedachter Ebenen, die von der jeweiligen Öffnungsachse senkrecht durchstossen werden, erstrecken.

Das Vakuumdoppelschieberventil umfasst ausserdem einen ersten Ventilantrieb mit einem ersten Verschlussteller und einen zweiten Ventilantrieb mit einem zweiten Verschlussteller.

Die Verschlussteller sind insbesondere mittels jeweils mindestens einer Schubstange, insbesondere zweier Schubstangen, mit den jeweiligen Ventilantrieben gekoppelt.

Der erste Verschlussteller, der eine erste Verschlusstellerebene definiert, besitzt eine mit der ersten Ventilsitzfläche korrespondierende erste Verschlussfläche zum gasdichten Schliessen der ersten Öffnung und des Transferkanals durch Herstellen eines dichtenden Kontakts der ersten Verschlussfläche des ersten Verschlusstellers mit der ersten Ventilsitzfläche mittels des ersten Ventilantriebs.

Ebenso weist der zweite Verschlussteller, der eine zweite Verschlusstellerebene definiert, eine mit der zweiten Ventilsitzfläche korrespondierende zweite Verschlussfläche zum gasdichten Schliessen der zweiten Öffnung und des Transferkanals durch Herstellen eines dichtenden Kontakts der zweiten Verschlussfläche mit der zweiten Ventilsitzfläche mittels des zweiten Ventilantriebs auf.

In anderen Worten sind die beiden Verschlussteller im Transferkanal entlang der Transferachse logisch in Reihe angeordnet und sind jeweils zum Schliessen des Transferkanals ausgebildet, wobei das Vakuumdoppelschieberventil nur dann geöffnet ist und den Transferkanal freigibt, wenn sich beide Verschlussteller zumindest teilweise in Offenstellung befinden.

Sowohl der erste Ventilantrieb als auch der zweite Ventilantrieb sind erfindungsgemäss jeweils als Linearantrieb zum linearen Verstellen des ersten Verschlusstellers bzw. des zweiten Verschlusstellers entlang einer linearen ersten Verstellachse parallel zur ersten Verschlusstellerebene bzw. entlang einer linearen zweiten Verstellachse parallel zur zweiten Verschlusstellerebene ausgebildet.

Erfindungsgemäss korrespondieren die Verschlussflächen der Verschlussteller mit den jeweiligen Ventilsitzflächen derart und die jeweilige Verschlussfläche und die entsprechende Ventilsitzfläche sind derart geformt, dass der Verschlussteller mittels einer linearen Bewegung, die nichtparallel und im Wesentlichen in einer Querrichtung zur Transferachse erfolgt, auf die Verschlussfläche derart gedrückt werden kann, dass um die jeweilige Öffnung herum ein dichtender Kontakt zwischen der Verschlussfläche und der Ventilsitzfläche hergestellt werden kann.

Hierzu verlaufen die Flächennormalen der zumindest teilweise gekrümmten ersten Ventilsitzfläche und der ersten Verschlussfläche im Wesentlichen parallel zu der ersten Verschlusstellerebene. Der erste Verschlussteller ist entlang der ersten Verstellachse zwischen einer ersten geöffneten, die erste Öffnung und den Transferkanal freigebenden Position und einer ersten gasdicht geschlossenen Position, in welcher die erste Öffnung sowie der Transferkanal verschlossen sind, mittels des ersten Ventilantriebs linear verschiebbar. In der ersten geschlossenen Position ist der erste Verschlussteller über die erste Öffnung linear geschobenen und drückt mit der ersten Verschlussfläche im Wesentlichen in erster Schliessrichtung der ersten Verstellachse auf die erste Ventilsitzfläche.

Entsprechend verlaufen die Flächennormalen der zumindest teilweise gekrümmten zweiten Ventilsitzfläche und der zweiten Verschlussfläche im Wesentlichen parallel zu der zweiten Verschlusstellerebene. Entsprechend ist der zweite Verschlussteller entlang der zweiten Verstellachse zwischen einer zweiten geöffneten, die zweite Öffnung und den Transferkanal freigebenden Position und einer zweiten gasdicht geschlossenen, über die zweite Öffnung linear geschobenen und somit mit der zweiten Verschlussfläche im Wesentlichen in zweiter Schliessrichtung der zweiten Verstellachse auf die zweite Ventilsitzfläche drückenden Position mittels des zweiten Ventilantriebs linear verschiebbar.

Unter den geometrischen Flächennormalen sind die Senkrechten auf der im geschlossenen Zustand des jeweiligen Verschlusstellers rings um die Öffnung verlaufenden Berührungsfläche der jeweiligen Ventilsitzfläche und der entsprechenden Verschlussfläche zu verstehen. Diese Berührungsfläche wird beispielsweise durch die Kontaktfläche eines Dichtungsbandes der Verschlussfläche und der Ventilsitzfläche gebildet. Unter dieser Definition sei allgemein zu verstehen, dass die jeweilige Ventilsitzfläche und die entsprechende Verschlussfläche derart ausgebildet sind, dass beim Schliessen des Verschlusstellers entlang der linearen Schliessrichtung das Drücken, also die Richtung der Druckkräfte, der Verschlussfläche auf die Ventilsitzfläche im Wesentlichen in einer Ebene erfolgt, die im Wesentlichen parallel zu der Ebene des Verschlusstellers verläuft, so dass Scherkräfte in eine Richtung normal zur jeweiligen Verschlusstellerebene ganz oder im Wesentlichen vermieden werden. Die jeweilige lineare Verstellachse ist die Gerade zwischen der geöffneten und der geschlossenen Position des jeweiligen Verschlusstellers.

Ein derartiges Dichtprinzip ist im Wesentlichen aus dem Stand der Technik, beispielsweise als das unter der Produktbezeichnung "MONOVAT Reihe 02 und 03" von der Firma VAT Vakuumventile AG in Haag, Schweiz entwickelte und vertriebene Rechteckinsertventil, bekannt. Der Aufbau und die Funktionsweise eines solchen Ventils werden beispielsweise in der US 4,809,950 (Geiser) und der US 4,881,717 (Geiser) beschrieben, auf deren Inhalt hiermit referenziert wird.

Ein geeigneter Antrieb zur Bewirkung einer linearen Bewegung des Verschlusstellers ist in der JP 6241344 (Buriida Fuuberuto) dargestellt. Der dort beschriebene Ventilantrieb besitzt exzentrisch gelagerte Hebel zum linearen Verschieben von Schubstangen, an welchen ein Verschlussteller angeordnet ist.

Durch den erfindungsgemässen, innerhalb eines gemeinsamen Gehäuses erfolgenden Einsatz zweier Ventilverschlüsse, mittels welcher der Transferkanal durch eine Linearbewegung jeweils unabhängig gasdicht verschlossen werden kann, sowie durch die Verwendung zweier Linearantriebe ist es möglich, ein kompakt und einfach aufgebautes, leicht wartbares und schmales Vakuumdoppelschieberventil bereit zu stellen. Somit kann der Abstand der beiden Vakuumkammern, zwischen denen das Vakuumdoppelschieberventil angeordnet ist, gering gehalten werden. Da den beiden Vakuumkammern jeweils ein Verschlussteller zugeordnet ist und die beiden Vakuumkammern jeweils unabhängig voneinander von dem Ventilinneren und somit dem jeweils anderen Ventilverschluss trennbar sind, kann eine Wartung im Ventilinneren ohne Flutung beider Vakuumkammern durch Geschlossenhalten mindestens einer Vakuumkammer erfolgen.

Vorzugsweise verlaufen die lineare ersten Verstellachse des ersten Verschlusstellers und die lineare zweite Verstellachse des zweiten Verschlusstellers jeweils parallel zu einer Längsebene, in welcher die Transferachse liegt. Insbesondere liegen sie in dieser Längsebene. Die Längsebene ist die Mittelebene des Transferkanals, welche diesen längs halbiert.

Die Mittelebene erstreckt sich vorzugsweise in Richtung der Querschnittshöhe des Transferkanals.

In einer vorteilhaften Weiterbildung sind die erste Schliessrichtung des ersten Verschlusstellers und die zweite Schliessrichtung des zweiten Verschlusstellers im Wesentlichen entgegengesetzt und verlaufen insbesondere im Wesentlichen in Richtung der Querschnittshöhe. In anderen Worten bewegen sich die beiden Verschlussteller beim Schliessen aufeinander zu und der Abstand der beiden Verschlussteller zueinander verringert sich jeweils in Schliessrichtung, wenn einer der beiden Verschlussteller in Schliessrichtung bewegt wird. Die beiden Schliessrichtungen können frontal entgegengesetzt aufeinander zu laufen, oder sie laufen schräg entgegengesetzt aufeinander zu. In letzterem Fall sind sie also im Wesentlichen entgegengesetzt.

Die erste Verschlusstellerebene und die zweite Verschlusstellerebene verlaufen im Falle schräg entgegengesetzt verlaufender Schliessrichtungen derart schräg zueinander, dass sich die beiden Verschlusstellerebenen mit einem Schnittwinkel, der zwischen über 0° und 45°, insbesondere zwischen 3° und 20°, im Speziellen zwischen 5° und 15° beträgt, in einer geometrischen Schnittgerade (7), die eine geometrische Normale zu der Längsebene (5) bildet, schneiden.

Diese schräge, nichtparallele Anordnung der Verschlusstellerebenen und der Verstellachsen hat sich als besonders vorteilhaft für einen schmalen Aufbau des Vakuumdoppelschieberventils erwiesen, da es somit möglich ist, die beiden Ventilantriebe im Wesentlichen in einer Ebene, insbesondere auf unterschiedlichen Seiten des Ventilgehäuses anzuordnen.

Die Transferachse bildet insbesondere eine geometrische Normale zu der ersten Verschlusstellerebene oder der zweiten Verschlusstellerebene. In anderen Worten wird eine der Verschlusstellerebenen senkrecht von der Transferachse durchstossen und die jeweilige Verstellachse verläuft senkrecht zu der Transferachse. In einer speziellen Ausführungsform verlaufen die beiden Verschlusstellerebenen und somit auch die beiden Verstellachsen parallel zueinander.

In einer Weiterbildung der Erfindung bilden der erste Ventilantrieb und der erste Verschlussteller eine zusammenhängende erste Einheit und/oder der zweite Ventilantrieb und der zweite Verschlussteller bilden eine zusammenhängende zweite Einheit. Hierzu weist das Ventilgehäuse mindestens eine Seitenöffnung auf, an welcher die ersten Einheit bzw. die zweite Einheit mittels erster Befestigungsmittel bzw. zweiter Befestigungsmittel lösbar angeordnet ist. Die jeweilige Einheit schliesst die entsprechende Seitenöffnung im angeordneten Zustand auf gasdichte Weise. Der jeweilige Verschlussteller ist durch die entsprechende Seitenöffnung in das Innere des Ventilgehäuses hineingeführt. Die jeweilige Einheit und die entsprechende Seitenöffnung sind derart ausgebildet, dass die Einheit von dem Ventilgehäuse entkoppelbar und der entsprechende Verschlussteller entgegen seiner Schliessrichtung aus dem Ventilgehäuse herausziehbar ist. Insbesondere sind zwei Seitenöffnungen und Einheiten vorgesehen und die erste Seitenöffnung und die zweite Seitenöffnung sind auf gegenüberliegenden Seiten des Ventilgehäuses angeordnet. Mittels dieser Weiterbildung der Erfindung ist ein einfaches Austauschen eines Verschlusstellers durch Herausziehen der jeweiligen Einheit aus dem Ventilgehäuse, falls erforderlich sogar ein einfacher Austausch einer gesamten Einheit einschliesslich des Ventilantriebs möglich, wobei im geschlossenen Zustand des jeweils anderen Ventilverschlusses ein Fluten der verschlossenen Vakuumkammer nicht erforderlich ist.

Es ist möglich, dass beide Ventilteller und Ventilantriebe als Prozessventile zum regulären, im normalen Betrieb erfolgenden Öffnen und Schliessen des Transferkanals gleichartig ausgebildet sind. Für bestimmte Anwendungen kommt der zweite Ventilverschluss jedoch nur dann zum Einsatz, wenn der erste Verschlussteller, der erste Antrieb oder die gesamte erste Einheit gewartet werden sollen. Im Normalfall befindet sich der zweite Verschlussteller somit in Offenstellung. Im Falle einer Wartung des ersten Verschlusstellers wird der zweite Verschlussteller in Geschlossenstellung gebracht, wodurch diejenige Vakuumkammer, welche sich auf der Seite des zweiten Verschlusstellers befindet, gasdicht vom ersten Verschlussteller und dem Ventilinneren getrennt wird. Es ist nun möglich, nach dem Fluten des Ventilinneren und Öffnen des Ventilgehäuses auf den ersten Verschlussteller zuzugreifen, diesen insbesondere aus dem Ventilgehäuse herauszuziehen und beispielsweise gegen einen neuen Verschlussteller zu ersetzen. In diesem Fall kommt der zweite Verschlussteller also nur Ausnahmsweise zum Einsatz. Einer hochpräzisen und schnellen Verstellbarkeit des zweiten Verschlusstellers bedarf es hierzu nicht. Daher sieht die Erfindung in einer Weiterbildung vor, dass der zweite Ventilantrieb einfacher und kompakter ausgebildet ist als der erste Ventilantrieb. Insbesondere wird der zweite Ventilantrieb von zwei Linearantrieben, beispielsweise zwei Pneumatikzylindern, gebildet, die an gegenüberliegenden Seiten des Ventilgehäuses, insbesondere an den schmalen Seiten seitlich angeordnet sind. Die beiden Linearantriebe sind mittels einer sich seitlich am Ventilgehäuse, insbesondere an der breiten Seite erstreckenden Brücke, an welcher der zweite Verschlussteller angeordnet ist, gekoppelt.

Um ebenfalls eine einfache Wartung der ersten und/oder zweiten Ventilsitzfläche zu ermöglichen, weist das Ventilgehäuse in eine Ausführungsform der Erfindung einen Ventilsitzträgerabschnitt in Form einer so genannten Kassettendichtung auf, in welchem die jeweilige Öffnung und die entsprechende Ventilsitzfläche ausgeformt sind. Der gasdicht mit dem restlichen Ventilgehäuse verbundene Ventilsitzträgerabschnitt kann von dem Ventilgehäuse, insbesondere in Richtung parallel zur Transferachse, entkoppelt werden.

Das erfindungsgemässe Vakuumdoppelschieberventil wird nachfolgend anhand eines in den Zeichnungen schematisch dargestellten konkreten Ausführungsbeispiels rein beispielhaft näher beschrieben.

Im Einzelnen zeigen
- Fig. 1: eine Schrägansicht auf ein Vakuumdoppelschieberventil mit einer entkoppelten ersten und zweiten Einheit und einem entkoppelten Ventilsitzträgerabschnitt;
- Fig. 2a: eine seitliche Querschnittsansicht auf das Vakuumdoppelschieberventil in erster geschlossener Position und zweiter geschlossenen Position;
- Fig. 2b: eine seitliche Querschnittsansicht auf das Vakuumdoppelschieberventil in erster geschlossener Position und zweiter geöffneter Position;
- Fig. 2c: eine seitliche Querschnittsansicht auf das Vakuumdoppelschieberventil in erster geöffneter Position und zweiter geschlossenen Position; und
- Fig. 3: eine Frontansicht auf das Vakuumdoppelschieberventil.

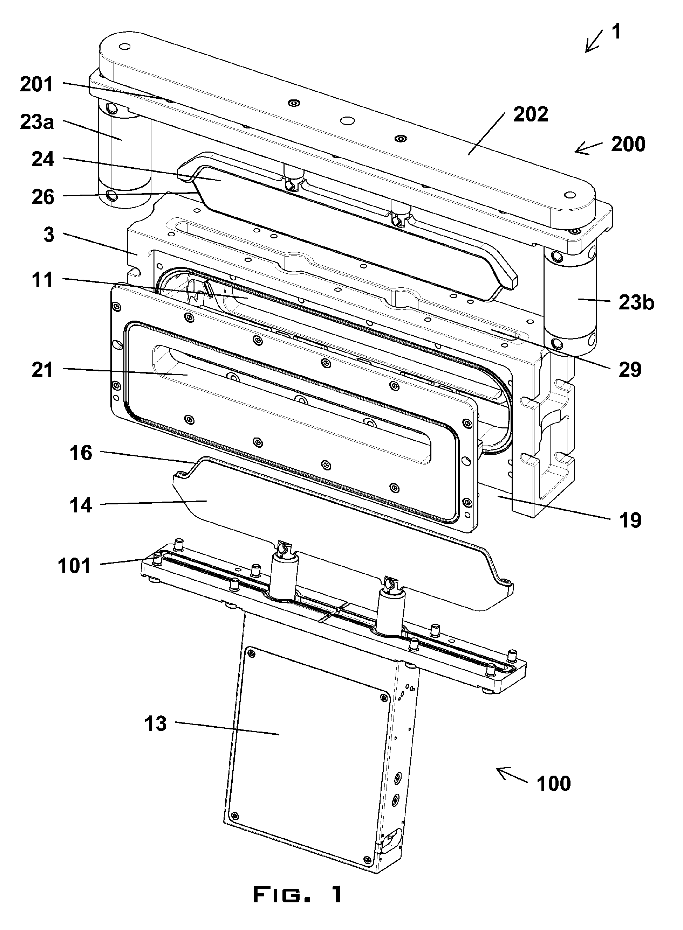

Die Figuren 1 bis 3 zeigen eine einzige Ausführungsform der Erfindung in unterschiedlichen Ansichten, Zuständen und Detaillierungsgraden. Aus diesem Grunde werden die Figuren zum Teil gemeinsam beschrieben, wobei auf bereits erläuterte Bezugszeichen teilweise nicht nochmals eingegangen wird.

In den Figuren 1, 2a, 2b, 2c und 3 ist jeweils das gleiche Vakuumdoppelschieberventil 1 zum gasdichten Schliessen eines Transferkanals 2, mittels welchem zwei nicht dargestellte Vakuumkammern gasdicht trennbar verbunden werden können, gezeigt. Das Vakuumdoppelschieberventil 1 besitzt ein Ventilgehäuse 3, durch welches der Transferkanal 2 führt und das zwischen den beiden Vakuumkammern angeordnet werden kann. In dem Ventilgehäuse 3 ist eine erste Öffnung 11 für den Transferkanal 2 und im Ventilinneren eine die erste Öffnung 11 umschliessende erste Ventilsitzfläche 12 aufgeformt. Gegenüberliegend zur ersten Öffnung 11 befindet sich eine zweite Öffnung 21 für den Transferkanal 2 und eine die zweite Öffnung 21 ebenfalls umschliessende zweite Ventilsitzfläche 22. Die erste Öffnung 11 und die zweite Öffnung 21 haben eine gemeinsame Transferachse 4 entlang des Transferkanals 2.

Das Ventilgehäuse 3 weist einen Ventilsitzträgerabschnitt 6 in Form einer Kassettendichtung auf, in welchem die zweite Öffnung 21 und die zweite Ventilsitzfläche 22 ausgeformt sind, wobei der gasdicht mit dem restlichen Ventilgehäuse 3 verbundene Ventilsitzträgerabschnitt 6 von dem Ventilgehäuse 3 in Richtung parallel zur Transferachse 4 entkoppelbar ist.

Während in Figur 1 der entkoppelte Zustand des Ventilsitzträgerabschnitts 6 gezeigt ist, wird in den restlichen Figuren der angeordnete Zustand dargestellt.

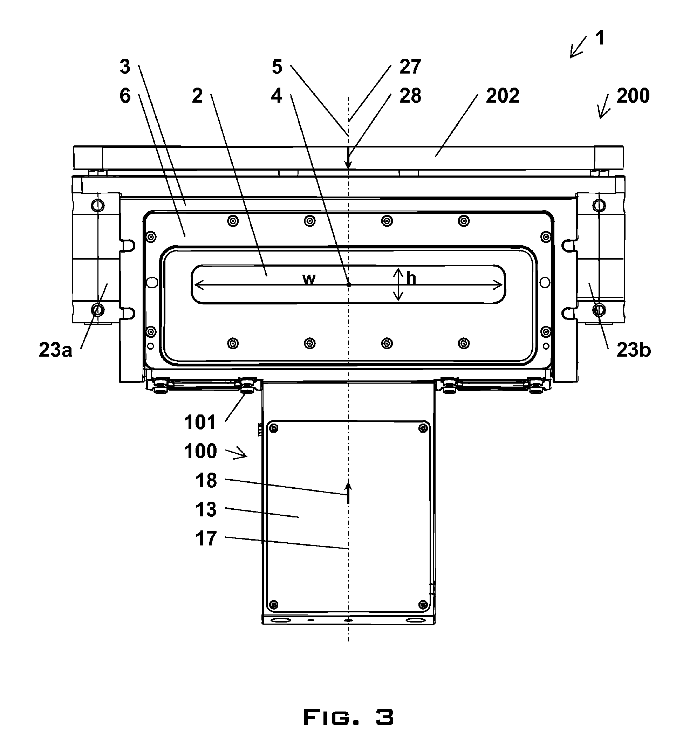

Das Vakuumdoppelschieberventil 1 ist als Rechteckschieber-Transferventil mit einem im Wesentlichen rechteckigen Querschnitt des Transferkanals 2, der ersten Öffnung 11 und der zweiten Öffnung 21 ausgebildet, wobei rechteckige Querschnitt eine Querschnittsbreite w aufweist, die im gezeigten Beispiel über das Fünffache der Querschnittshöhe h beträgt, wie in Figur 3 gezeigt.

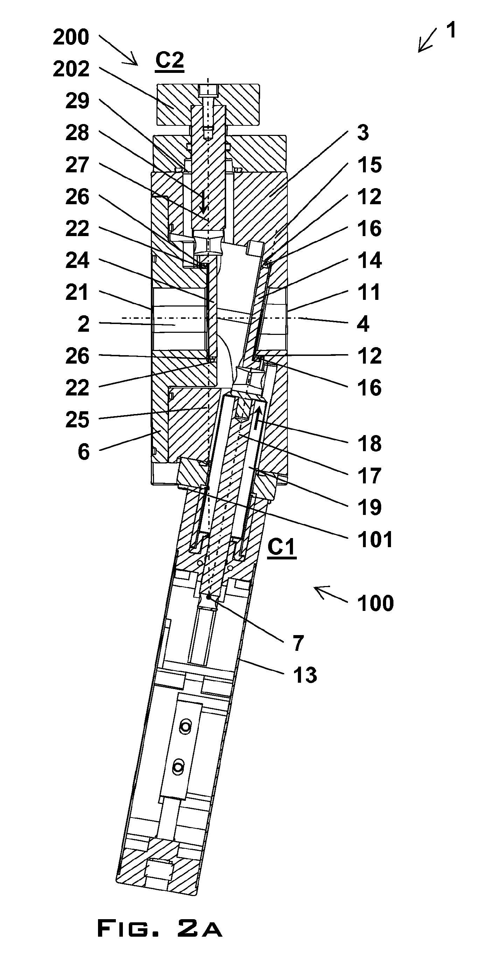

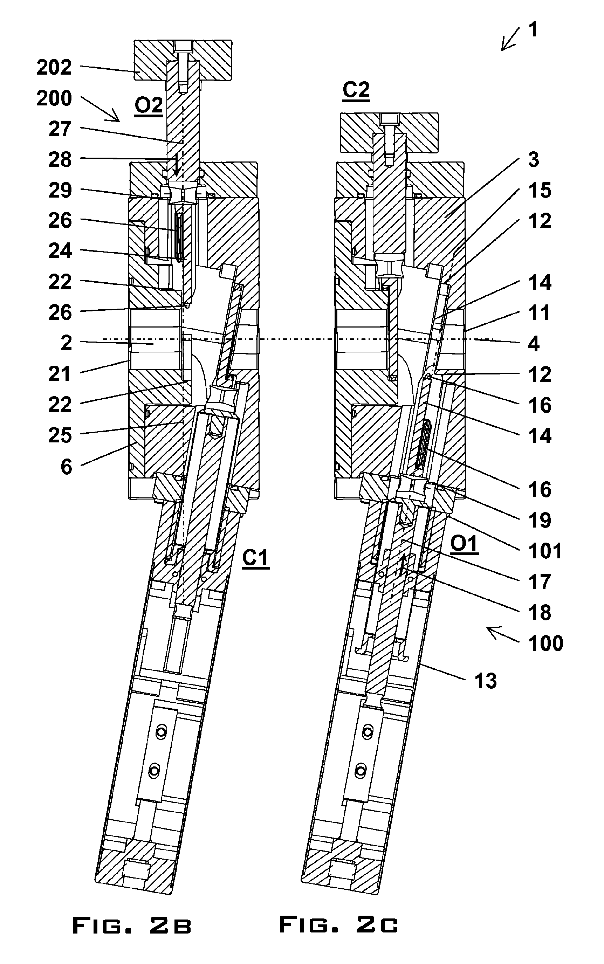

Das Vakuumdoppelschieberventil 1 hat einen ersten Ventilantrieb 13 und einen ersten Verschlussteller 14, der eine erste Verschlusstellerebene 15 definiert, mit einer mit der ersten Ventilsitzfläche 12 korrespondierenden ersten Verschlussfläche 16 zum gasdichten Schliessen der ersten Öffnung 11 und des Transferkanals 2 durch Herstellen eines dichtenden Kontakts der ersten Verschlussfläche 16 mit der ersten Ventilsitzfläche 12 mittels des ersten Ventilantriebs 13. Der erste Ventilantrieb 13 ist als Linearantrieb zum linearen Verstellen des ersten Verschlusstellers 14 entlang einer linearen ersten Verstellachse 17 parallel zur ersten Verschlusstellerebene 15 ausgebildet. Da die erste Verstellachse 17 im gezeigten Beispiel in der ersten Verschlusstellerebene 15 liegt, sind die beiden geometrischen Elemente in Form einer gemeinsamen gestrichelten Linie in den Figuren 2a bis 2c dargestellt. Die Flächennormalen der zumindest teilweise gekrümmten ersten Ventilsitzfläche 12 und der ersten Verschlussfläche 16 verlaufen im Wesentlichen parallel zu der ersten Verschlusstellerebene 15. Der erste Verschlussteller 14 ist entlang der ersten Verstellachse 17 zwischen einer ersten geöffneten, die erste Öffnung 11 freigebenden Position O1, Figur 2c, und einer ersten gasdicht geschlossenen, über die erste Öffnung 11 linear geschobenen und somit mit der ersten Verschlussfläche 16 im Wesentlichen in erster Schliessrichtung 18 der ersten Verstellachse 17 auf die erste Ventilsitzfläche 12 drückenden Position C1, Figuren 2a und 2b, mittels des ersten Ventilantriebs 13 linear verschiebbar. Der erste Ventilantrieb 13 und der erste Verschlussteller 14 bilden eine zusammenhängende und austauschbare erste Einheit 100, wie in Figur 1 gezeigt. Das Ventilgehäuse 3 weist eine untere erste Seitenöffnung 19 auf, an welcher die ersten Einheit 100 mittels als Schrauben ausgebildeter erster Befestigungsmittel 101 lösbar angeordnet ist, wie in den Figuren 2a bis 3 dargestellt. Im angeordneten Zustand schliesst die erste Einheit 100 die erste Seitenöffnung 19 gasdicht. Der erste Verschlussteller 14 ist durch die erste Seitenöffnung 19 in das Innere des Ventilgehäuses 3 hineingeführt. Die erste Einheit 100 und die erste Seitenöffnung 19 sind derart ausgebildet, dass die erste Einheit 100 von dem Ventilgehäuse 3 entkoppelt und der erste Verschlussteller 14 entgegen der ersten Schliessrichtung 18 aus dem Ventilgehäuse 3 herausgezogen werden kann, wie in Figur 1 gezeigt.

Der erste Verschlussteller 14 bildet bei dem gezeigten Vakuumdoppelschieberventil 1 das Prozessventil, mittels welchem im normalen Betrieb der Transferkanal 4 geöffnet und wieder gasdicht verschlossen werden kann.

Ausserdem umfasst das Vakuumdoppelschieberventil 1 einen zweiten Ventilantrieb 23a und 23b sowie einen mit dem ersten Verschlussteller 14 identischen zweiten Verschlussteller 24, der eine zweite Verschlusstellerebene 25 definiert, mit einer mit der zweiten Ventilsitzfläche 22 korrespondierenden zweiten Verschlussfläche 26 zum gasdichten Schliessen der zweiten Öffnung 21 und des Transferkanals 2 durch Herstellen eines dichtenden Kontakts der zweiten Verschlussfläche 26 mit der zweiten Ventilsitzfläche 22 mittels des zweiten Ventilantriebs 23a und 23b. Der zweite Ventilantrieb wird von zwei Linearantrieben 23a und 23b in Form zweier Pneumatikzylinder gebildet, die an den gegenüberliegenden schmalen Seiten des Ventilgehäuses 3 seitlich angeordnet sind. Die beiden Linearantriebe 23a und 23b sind über eine sich seitlich an der breiten Seite am Ventilgehäuse 3 erstreckenden Brücke 202, an welcher der zweite Verschlussteller 24 angeordnet ist, gekoppelt. Mittels der beiden Linearantriebe 23a und 23b ist der zweite Verschlussteller 24 entlang einer linearen zweiten Verstellachse 27 parallel zur zweiten Verschlusstellerebene 25 verstellbar. Die Flächennormalen der zumindest teilweise gekrümmten zweiten Ventilsitzfläche 22 und der zweiten Verschlussfläche 26 verlaufen im Wesentlichen parallel zu der zweiten Verschlusstellerebene 25. Der zweite Verschlussteller 24 ist entlang der zweiten Verstellachse 27 zwischen einer zweiten geöffneten, die zweite Öffnung 21 freigebenden Position 02, Figur 2b, und einer zweiten gasdicht geschlossenen, über die zweite Öffnung 21 linear geschobenen und somit mit der zweiten Verschlussfläche 26 im Wesentlichen in zweiter Schliessrichtung 28 der zweiten Verstellachse 27 auf die zweite Ventilsitzfläche 22 drückenden Position C2, Figuren 2a und 2c, mittels des zweiten Ventilantriebs 23a, 23b linear verschiebbar.

Wie in Figur 1 gezeigt, bilden auch der zweite Ventilantrieb 23a uns 23b sowie der zweite Verschlussteller 24 eine zusammenhängende zweite Einheit 200. Das Ventilgehäuse 3 hat eine zweite Seitenöffnung 29, an welcher die zweite Einheit 200, die zweite Seitenöffnung 29 gasdicht schliessend, mittels von Schrauben gebildeter zweiter Befestigungsmittel 201 lösbar angeordnet ist, wobei der zweite Verschlussteller 24 durch die zweite Seitenöffnung 29 in das Innere des Ventilgehäuses 3 hineingeführt ist, wie es die Figuren 2a bis 3 zeigen. Die ersten Seitenöffnung 19 und die zweite Seitenöffnung 29 sind auf den gegenüberliegenden breiten Seiten des Ventilgehäuses 3 angeordnet. Die zweite Einheit 200 und die zweite Seitenöffnung 29 sind derart ausgebildet, dass die zweite Einheit 200 von dem Ventilgehäuse 3 entkoppelbar und der zweite Verschlussteller 24 entgegen der zweiten Schliessrichtung 28 aus dem Ventilgehäuse 3 herausziehbar ist, wie in Figur 1 veranschaulicht.

Der zweite Verschlussteller 24 mit dem zweiten Ventilverschluss 23a und 23b bildet im gezeigten Ausführungsbeispiel ein Serviceventil, dass sich im Normalbetrieb des Vakuumdoppelschieberventil 1 in zweiter geöffneter Position 02, wie in Figur 2b gezeigt, befindet. Im Wesentlichen nur zur Wartung des ersten Verschlusstellers 14 zum gasdichten Abdichten der zweiten Öffnung 21 vom Ventilinneren oder zur zusätzlichen Abdichtung beispielsweise aus Sicherheitsgründen wird der zweite Verschlussteller 24 in die zweite geschlossene Position C2, Figuren 2a und 2c, gebracht. Aus diesem Grunde ist der zweite Ventilantrieb 23a und 23b kompakter und einfacher ausgebildet als der erste Ventilantrieb 13, der zum präzisen und schnellen Ventilbetätigung bei normalem Prozessablauf eingesetzt wird. Dies ermöglicht eine besonders kompakte und flache Ausbildung des Vakuumdoppelschieberventil 1.

Wie in Figur 3 gezeigt, verlaufen die ersten Verstellachse 17 und die zweite Verstellachse 27 jeweils parallel zu einer Längsebene 5, in welcher die Transferachse 4 liegt und welche den Transferkanal 4 längs in Richtung der Querschnittshöhe h halbiert. Im gezeigten Beispiel liegen die erste Verstellachse 17, die zweite Verstellachse 27 und die Transferachse 4 in dieser Längsebene 5, weshalb sie als eine einzige gestrichelte Linie dargestellt sind.

Die erste Schliessrichtung 18 und die zweite Schliessrichtung 28 sind im Wesentlichen entgegengesetzt, wie aus den Figuren 2a bis 2c ersichtlich. Die Verstellachsen 17 und 27 verlaufen hierbei im Wesentlichen in Richtung der Querschnittshöhe h. Die Transferachse 4 bildet eine geometrische Normale zu der zweiten Verschlusstellerebene 25. Hingegen ist die erste Verschlusstellerebene 15 leicht schräg zur senkrechten zweiten Verschlusstellerebene 25 ausgerichtet. Die erste Verschlusstellerebene 15 und die zweite Verschlusstellerebene 25 verlaufen derart schräg zueinander, dass sich die beiden Verschlusstellerebenen 15 und 25 mit einem Schnittwinkel, der im gezeigten Ausführungsbeispiel etwa 10° beträgt, in einer geometrischen Schnittgerade 7, die eine geometrische Normale zu der Längsebene 5 bildet, schneiden, wie in Figur 2a gezeigt.

Diese relative Schräganordnung der Verschlussteller 14 und 24, deren Verschlusstellerebenen 15 und 25 sowie deren Verstellachsen 17 und 27 ermöglicht eine besonders schmale Ausgestaltung des Vakuumdoppelschieberventils 1, da die Ventilantriebe 13, 23a und 23b im Wesentlichen in einer Ebenen angeordnet werden können, ohne dass es zu einer Kollision der Verschlussteller 14 und 24 im Ventilinneren kommt.

Das erläuterte konkrete Ausführungsbeispiel dient lediglich zur exemplarischen Veranschaulichung der Erfindung anhand schematischer Darstellungen. Selbstverständlich beschränkt sich die Erfindung nicht auf dieses Ausführungsbeispiel und dessen Merkmalskombination.

## Patentansprüche

1. Vakuumdoppelschieberventil (1) zum gasdichten Schliessen eines Transferkanals (2) zwischen zwei Vakuumkammern, mit
• einem Ventilgehäuse (3), durch welches der Transferkanal (2) führt und das zwischen den beiden Vakuumkammern anordenbar ist, mit
□ einer ersten Öffnung (11) für den Transferkanal (2) und einer die erste Öffnung (11) umschliessenden ersten Ventilsitzfläche (12),
□ einer der ersten Öffnung (11) gegenüberliegenden zweiten Öffnung (21) für den Transferkanal (2) und einer die zweite Öffnung (21) umschliessenden zweiten Ventilsitzfläche (22)
wobei die erste Öffnung (11) und die zweite Öffnung (21) eine gemeinsame Transferachse (4) entlang des Transferkanals (2) aufweisen,
• einem ersten Ventilantrieb (13),
• einem ersten Verschlussteller (14), der eine erste Verschlusstellerebene (15) definiert, mit
□ einer mit der ersten Ventilsitzfläche (12) korrespondierenden ersten Verschlussfläche (16) zum gasdichten Schliessen der ersten Öffnung (11) und des Transferkanals (2) durch Herstellen eines dichtenden Kontakts der ersten Verschlussfläche (16) mit der ersten Ventilsitzfläche (12) mittels des ersten Ventilantriebs (13),
• einem zweiten Ventilantrieb (23a, 23b),
• einem zweiten Verschlussteller (24), der eine zweite Verschlusstellerebene (25) definiert, mit
□ einer mit der zweiten Ventilsitzfläche (22) korrespondierenden zweiten Verschlussfläche (26) zum gasdichten Schliessen der zweiten Öffnung (21) und des Transferkanals (2) durch Herstellen eines dichtenden Kontakts der zweiten Verschlussfläche (26) mit der zweiten Ventilsitzfläche (22) mittels des zweiten Ventilantriebs (23a, 23b),
**dadurch gekennzeichnet, dass**
• der erste Ventilantrieb (13) als Linearantrieb zum linearen Verstellen des ersten Verschlusstellers (14) entlang einer linearen ersten Verstellachse (17) parallel zur ersten Verschlusstellerebene (15) ausgebildet ist,
• der zweite Ventilantrieb (23a, 23b) als Linearantrieb zum linearen Verstellen des zweiten Verschlusstellers (24) entlang einer linearen zweiten Verstellachse (27) parallel zur zweiten Verschlusstellerebene (25) ausgebildet ist,
• die Flächennormalen der zumindest teilweise gekrümmten ersten Ventilsitzfläche (12) und der ersten Verschlussfläche (16) im Wesentlichen parallel zu der ersten Verschlusstellerebene (15) verlaufen und der erste Verschlussteller (14) entlang der ersten Verstellachse (17) zwischen
□ einer ersten geöffneten, die erste Öffnung (11) freigebenden Position (O1) und
□ einer ersten gasdicht geschlossenen, über die erste Öffnung (11) linear geschobenen und somit mit der ersten Verschlussfläche (16) im Wesentlichen in erster Schliessrichtung (18) der ersten Verstellachse (17) auf die erste Ventilsitzfläche (12) drückenden Position (C1)
mittels des ersten Ventilantriebs (13) linear verschiebbar ist, und
• die Flächennormalen der zumindest teilweise gekrümmten zweiten Ventilsitzfläche (22) und der zweiten Verschlussfläche (26) im Wesentlichen parallel zu der zweiten Verschlusstellerebene (25) verlaufen und der zweite Verschlussteller (24) entlang der zweiten Verstellachse (27) zwischen
□ einer zweiten geöffneten, die zweite Öffnung (21) freigebenden Position (02) und
□ einer zweiten gasdicht geschlossenen, über die zweite Öffnung (21) linear geschobenen und somit mit der zweiten Verschlussfläche (26) im Wesentlichen in zweiter Schliessrichtung (28) der zweiten Verstellachse (27) auf die zweite Ventilsitzfläche (22) drückenden Position (C2)
mittels des zweiten Ventilantriebs (23a, 23b) linear verschiebbar ist.

2. Vakuumdoppelschieberventil (1) nach Anspruch 1, **dadurch gekennzeichnet, dass**
• die ersten Verstellachse (17) und die zweite Verstellachse (27) jeweils parallel zu einer Längsebene (5), in welcher die Transferachse (4) liegt, verlaufen und
• die erste Schliessrichtung (18) und die zweite Schliessrichtung (28) im Wesentlichen entgegengesetzt sind.

3. Vakuumdoppelschieberventil (1) nach Anspruch 1 oder 2,
**dadurch gekennzeichnet, dass**
die Transferachse (4) eine geometrische Normale zu der erste Verschlusstellerebene (15) oder der zweiten Verschlusstellerebene (25) bildet.

4. Vakuumdoppelschieberventil (1) nach Anspruch 2 oder 3,
**dadurch gekennzeichnet, dass**
die erste Verschlusstellerebene (15) und die zweite Verschlusstellerebene (25) derart schräg zueinander verlaufen, dass sich die beiden Verschlusstellerebenen (15, 25) mit einem Schnittwinkel, der zwischen 0° und 45°, insbesondere zwischen 3° und 20°, im Speziellen zwischen 5° und 15° beträgt, in einer geometrischen Schnittgerade (7), die eine geometrische Normale zu der Längsebene (5) bildet, schneiden.

5. Vakuumdoppelschieberventil (1) nach einem der Ansprüche 1 bis 4, **dadurch gekennzeichnet, dass**
• der erste Ventilantrieb (13) und der erste Verschlussteller (14) eine zusammenhängende erste Einheit (100) bilden,
• das Ventilgehäuse (3) eine erste Seitenöffnung (19) aufweist, an welcher die ersten Einheit (100), die erste Seitenöffnung (19) gasdicht schliessend, mittels erster Befestigungsmittel (101) lösbar angeordnet ist, wobei der erste Verschlussteller (14) durch die erste Seitenöffnung (19) in das Innere des Ventilgehäuses (3) hineingeführt ist, und
• die erste Einheit (100) und die erste Seitenöffnung (19) derart ausgebildet sind, dass die erste Einheit (100) von dem Ventilgehäuse (3) entkoppelbar und der erste Verschlussteller (14) entgegen der ersten Schliessrichtung (18) aus dem Ventilgehäuse (3) herausziehbar ist.

6. Vakuumdoppelschieberventil (1) nach einem der Ansprüche 1 bis 5, **dadurch gekennzeichnet, dass**
• der zweite Ventilantrieb (23a, 23b) und der zweite Verschlussteller (24) eine zusammenhängende zweite Einheit (200) bilden,
• das Ventilgehäuse (3) eine zweite Seitenöffnung (29) aufweist, an welcher die zweite Einheit (200), die zweite Seitenöffnung (29) gasdicht schliessend, mittels zweiter Befestigungsmittel (201) lösbar angeordnet ist, wobei der zweite Verschlussteller (24) durch die zweite Seitenöffnung (29) in das Innere des Ventilgehäuses (3) hineingeführt ist, und
• die zweite Einheit (200) und die zweite Seitenöffnung (29) derart ausgebildet sind, dass die zweite Einheit (200) von dem Ventilgehäuse (3) entkoppelbar und der zweite Verschlussteller (24) entgegen der zweiten Schliessrichtung (28) aus dem Ventilgehäuse (3) herausziehbar ist.

7. Vakuumdoppelschieberventil (1) nach Anspruch 6, rückbezogen auf Anspruch 5, **dadurch gekennzeichnet, dass** die ersten Seitenöffnung (19) und die zweite Seitenöffnung (29) auf gegenüberliegenden Seiten des Ventilgehäuses (3) angeordnet sind.

8. Vakuumdoppelschieberventil (1) nach einem Ansprüche 1 bis 7, **dadurch gekennzeichnet, dass**
der zweite Ventilantrieb von zwei Linearantrieben (23a, 23b), insbesondere zwei Pneumatikzylindern, die an gegenüberliegenden Seiten des Ventilgehäuses (3) seitlich angeordnet sind, gebildet wird, wobei die beiden Linearantriebe (23a, 23b) mittels einer sich seitlich am Ventilgehäuse (3) erstreckenden Brücke (202), an welcher der zweite Verschlussteller (24) angeordnet ist, gekoppelt sind.

9. Vakuumdoppelschieberventil (1) nach einem Ansprüche 1 bis 8, **dadurch gekennzeichnet, dass**
das Vakuumdoppelschieberventil (1) als Rechteckschieber-Transferventil mit einem im Wesentlichen rechteckigen Querschnitt des Transferkanals (2), der ersten Öffnung (11) und der zweiten Öffnung (21) ausgebildet ist, wobei rechteckige Querschnitt eine Querschnittsbreite (w) aufweist, die mindestens das Fünffache der Querschnittshöhe (h) beträgt, und die Verstellachsen (17, 27) im Wesentlichen in Richtung der Querschnittshöhe (h) verlaufen.

10. Vakuumdoppelschieberventil (1) nach einem Ansprüche 1 bis 9, **dadurch gekennzeichnet, dass**
das Ventilgehäuse (3) einen Ventilsitzträgerabschnitt (6) aufweist, in welchem die zweite Öffnung (21) und die zweite Ventilsitzfläche (22) ausgeformt sind, wobei der gasdicht mit dem restlichen Ventilgehäuse (3) verbundene Ventilsitzträgerabschnitt (6) von dem Ventilgehäuse (3), insbesondere in Richtung parallel zur Transferachse (4), entkoppelbar ist.
